# EUROPEAN PATENT SPECIFICATION

(11) **EP 0 967 888 B1**
(45) Date of publication and mention of the grant of the patent: **12.03.2003**
(21) Application number: 98907084.2
(22) Date of filing: 18.03.1998
(51) Int. Cl.: A23L 1/0528, A23L 1/308

(54) **EDULCORATING SOLUBLE COMPOSITION CONTAINING ALIMENTARY FIBRES AND ITS USE**
LÖSLICHE, BALLASTSTOFF ENTHALTENDE SÜSSSTOFFZUSAMMENSETZUNG SOWIE DEREN VERWENDUNG
COMPOSITION EDULCORANTE SOLUBLE RENFERMANT DES FIBRES ALIMENTAIRES ET SON UTILISATION

(30) Priority: 25.03.1997 IT MI970681
(43) Date of publication of application: 05.01.2000
(73) Proprietor: Savas S.A.S., 20134 Milano (IT)
(72) Inventor: SENECI, Alessandro, I-20100 Milano (IT)
(74) Representative: Pistolesi, Roberto
(86) International application number: IB9800379
(87) International publication number: WO98042206

(56) References cited:
- EP-A- 0 420 728
- WO-A-90/12117
- WO-A-94/19973
- WO-A-95/06417
- DE-A- 19 514 274

## Description

The present invention concerns both an edulcorating soluble composition containing Inulin, combined with natural and/or synthetic sweeteners, and its alimentary use.

It is known that the industrial preparation of aliments refined more and more the food by impoverishing the same of natural alimentary fibres.

This fact increased the appearance of some gastrointestinal and methabolic pathologies which are typical of the modern age.

For this reason, the experts in alimentation have been recommending since some time the daily assumption of vegetables, fruit and wholemeal products which would be able to re-balance the damages caused by the alimentary refining.

However, several people have some difficulties in following these indications, both for wrong eating habits, and for the daily urgent engagements.

On the other hand, the industrial integration of aliments containing alimentary fibres, results hardly realizable because of the scarce solubility and the gelating phenomena which could occur as said fibres are inserted in food and drinks. Now, it has been surprisingly found that, thanks to the mixture of appropriate alimentary fibres with sweeteners, it is possible to obtain an edulcorating soluble composition containing fibres, which can be used for the softening of the substances to be swallowed and at the same time for integrating food and drinks both warm and cold with fibres, without, however, presenting gelating and/or insolubility phenomena.

The present invention relates therefore to an edulcorating composition as claimed in claim 1.

EP 0420728 discloses a stabilization process for sweetener that is altered by high temperatures by mixing said sweeteners with alimentary fibres. WO 95/06417 discloses a dietary supplement containing dietary fibre without any edulcorating action. WO 90/12117 discloses a sugar composition containing a significant amount of dietary fibre that is in a little amount to not after the properties of the sugar. DE 19514274 describes a dietary supplement containing inulin as fibre without any edulcorating action while in WO 94/19973 there is described a composition with inulin to form a colloidal dispersion without any edulcorating action.

The alimentary fibres are substances non assimilable of vegetal origin deriving either from the stem, or from the leaves or from the seeds of particular plants.

The fibres commonly commercialized, have a chemical composition constituted for the greatest part by cellulose and therefore by pectine substances, fats and waxes, present in the plant, and by a woody tissue particularly abundant in the fibre of the leaf.

The fibres which can be used in the present invention are those normally used in the dietetic-alimentary field, for example: the soluble fibres non gelating as inulin, fibre of chicory, fibre of acacia and similar; the soluble fibres gelating as pectin, agar-agar, karaja gum, guar gum, glucomannan, carob, seeds of carob, fibres insoluble or partially soluble as pea, beetroot, apple, oat, wheat, maize, soy, cacao, barley, carob, seeds of carob, hazelnut and fibres in general of vegetables, citrus fruits and cereals (lemon, orange, bean).

Particularly, in the present invention the use alimentary fibres soluble non gelating, if necessary in mixture among themselves is preferred.

In the composition of the present invention said fibres are therefore suitably mixed with some edulcorants or sweeteners, that is, substances having a taste more or less sweet. Among these, there are substances belonging to chemical classes very different and heterogeneous. Commonly, the edulcorants are divided into two foundamental groups: natural edulcorants and synthetic edulcorants.

The foundamental difference beween the edulcorants of the two classes is represented by the fact that while the natural edulcorants constitute an excellent biological fuel and therefore they produce calories, the synthetic edulcorants do not produce calories and so can be used even where, for pathological reasons or for other reasons, the alimentary use of saccharose (and of polysaccharides which release glucose in the metabolism process) is contraindicated and has to be limited.

In the composition of the present invention are used as synthetic sweeteners: acesulfame K, aspartame, cyclamic acid and its salts of sodium and calcium, saccharin and its salts of sodium, potassium and calcium, thaumatine, neoesperidine DC; as natural sweeteners it is possible to use the polyhydric alcohol, among which there are first of all those related to glucosides as, for example, sorbitol or different glucosides, as saccharose (cane sugar, beet sugar), considered the natural sweetener par exellence, glucose, fructose, invert sugar, dextrose.

Particularly, in the composition of the present invention the fibres are present in an amount of about 30-99% in weight of which at least about 50% formed by soluble fibres non gelating; while the synthetic sweeteners could be present in amounts variable between about 0,5-5% of the weight of the fibres used and the natural sweeteners could be added in measure of about 1-20% of the weight of the fibre.

The composition according to the present invention is obtained by mixing, in a suitable mixer for powders, (with screw, with four-ways, with square shaft or other) a suitable amount of fibre in powder, previously sieved, with a suitable amount of sweetener.

The mixer is set in motion and left in motion until when the distribution of the sweetener in the fibre is perfectly homogeneous. If necessary, the mixture is treated with steam for obtaining its instantanizing.

For its alimantary use, the composition of the present invention could be administrated orally in a formulation containing the same if necessary with conventional excipients non toxic.

The alimentary compositions suitable for the orally administration are in powder or granulate form. Said compositions could contain one or more colouring, flavouring agents, suitable for making the alimentary composition elegant and agreable.

The powders and the dispersing granulates suitable for the preparation of a water suspension by addition of water can contain the edulcorating composition in a mixture with suitable additions of a disgregating agent as starch, polyvinyl pyrrolidone, hydrogenated starch, and of a lubricating agent as magnesium stearate, calcium stearate and sodium stearate, hydrogenated vegetal fats.

Said mixture can be compressed if necessary in tablets which will constitute the units of use of the sweetener by the consumer.

For a better illustration of the present invention, hereinafter are the examples which are in no way limitative of the same.

### Exemple 1

| | |
|---|---|
| Inulin | 62,4% |
| Maltodestrine | 26 % |
| Mannitol | 6% |
| Reticulate Polyvinyl Pyrrolidone | 3% |
| Magnesium Stearate | 1 % |
| Saccharin | 0,9% |
| acesulfame K | 0,6% |
| Flavourings | 0,1% |
| %= weight percentage. | |

In a mixer with screw for powders are filled the fibre in powder previously sieved and the sweetener. The mixer is set in motion and left in motion until when the distribution of the sweetener in the fibre is perfectly homogeneous. The mixture as obtained can be used as such or can be submitted to a damp or dry granulation process, or to a process of instantanizing.

### Exemple 2

The same procedure of Exemple 1 but with the use of the following edulcorating composition:

| | |
|---|---|
| Inulin | 60% |
| Maltodestrine | 31,35% |
| Mannitol | 7,2% |
| Acesulfame k | 0,75% |
| Aspartame | 0,6% |
| Flavourings | 0,1% |
| %= weight percentage. | |

### Exemple 3

The same procedure of Exemple 1 but with the use of the following edulcorating composition

| | |
|---|---|
| Sorbitolo | 40,4% |
| Inulin | 15,95% |
| Fibre beetroot | 15,95% |
| Saccharose | 13,95% |
| Destrose | 10,95% |
| Sucro ester | 1% |
| Glucomannan | 1% |
| Aspartame | 0,6% |
| Flavouring | 0,2% |
| %= weight percentage. | |

### Example 4

| | |
|---|---|
| Inulin | 62,4% |
| Maltodestrine | 26 % |
| Mannitol | 6 % |
| Reticulate. Polyvinyl pyrrolidone | 3 % |
| Magnesium Stearate | 1 % |
| Saccharin | 0.9% |
| Acesulfame k | 0.6% |
| Flavourings | 0.1% |
| %= weight percentage. | |

## Claims

1. An edulcorating soluble composition in form of a powder or granulate which contains at least a non gelating soluble alimentary fibre and one or more synthetic sweeteners, **characterized in that** said non gelating soluble alimentary fibre is inulin.

2. An edulcorating soluble composition according to claim 1, **characterized in that** inulin is contained in admixture with other alimentary fibres selected from the group of soluble, insoluble or partially soluble gelating alimentary fibres.

3. An edulcorating soluble composition according to claim 2, **characterized in that** the fibres are present in amounts of 30-99% by weight of which at least 50% formed by inulin.

4. An edulcorating soluble composition according to claim 1, **characterized in that** the synthetic sweeteners are present in amounts of 0.5-5% of the weight of the fibres.

5. An edulcorating soluble composition according to claim 2, **characterized in that** said soluble gelating alimentary fibres are selected from pectin, agar-agar, karaja gum, guar gum, glucomannan, carob, seeds of carob.

6. An edulcorating soluble composition according to claim 2, **characterized in that** said insoluble or partially soluble gelating alimentary fibres are selected from pea, beetroot, apple, oat, wheat, maize, soy, cacao, barley, carot, seeds of carot, hazelnut and fibres of vegetables, citrus fruits and cereals.

7. An edulcorating soluble composition according to claim 1, **characterized in that** the synthetic sweeteners are selected from acesulfame K, aspartame, cyclamic acid and its salts of sodium and calcium, saccharine and its salts of sodium, potassium and calcium, thaumatine, neoesperidine DC.

8. An edulcorating soluble composition according to claims 1-7, **characterized in that** said composition contains non toxic excipients selected from inert diluents, as lactose, calcium phosphate or sodium phosphate; granulating or disgregating agents, as wheat starch, alginic acid, polyvinyl pyrrolidone; binding agents as starch, gelatins, cellulose; lubricating agents as magnesium stearate, stearic acid, magnesium, sodium and calcium salts of stearic acid and hydrogenated vegetal salts or talcum powder.

9. Use of an edulcorating soluble composition according to claims 1-8 for sweetening warm and cold drinks.

## Patentansprüche

1. Lösliche Süßstoffzusammensetzung in Form eines Pulvers oder Granulats, die mindestens einen nicht-gelierenden löslichen Ballaststoff und einen oder mehrere synthetische Süßstoffe enthält, **dadurch gekennzeichnet, daß** der nicht-gelierende lösliche Ballaststoff Inulin ist.

2. Lösliche Süßstoffzusammensetzung gemäß Anspruch 1, **dadurch gekennzeichnet, daß** das Inulin in einer Mischung mit anderen Ballaststoffen enthalten ist, die aus der Gruppe löslicher, unlöslicher oder teilweise löslicher gelierender Ballaststoffe ausgewählt werden.

3. Lösliche Süßstoffzusammensetzung gemäß Anspruch 2, **dadurch gekennzeichnet, daß** die Ballaststoffe in einer Menge von 30 bis 99 Gew.-% vorliegen, von denen mindestens 50 % durch Inulin gebildet werden.

4. Lösliche Süßstoffzusammensetzung gemäß Anspruch 1, **dadurch gekennzeichnet, daß** die synthetischen Süßstoffe in einer Menge von 0,5 bis 5 Gew.-% der Ballaststoffe vorliegen.

5. Lösliche Süßstoffzusammensetzung gemäß Anspruch 2, **dadurch gekennzeichnet, daß** die löslichen gelierenden Ballaststoffe unter Pectin, Agar-Agar, Karajagummi, Guargummi, Glucomannan, Johannisbrotbaum und Johannisbrotbaumkernen ausgewählt werden.

6. Lösliche Süßstoffzusammensetzung gemäß Anspruch 2, **dadurch gekennzeichnet, daß** die unlöslichen oder teilweise löslichen, gelierenden Ballaststoffe ausgewählt werden unter Erbsen, Wurzeln der roten Beete, Apfel, Hafer, Weizen, Mais, Soja, Kakao, Gerste, Karotte, Karottensamen, Haselnuß und Ballaststoffen aus Gemüsen, Zitrusfrüchten und Getreiden.

7. Lösliche Süßstoffzusammensetzung gemäß Anspruch 1, **dadurch gekennzeichnet, daß** die synthetischen Süßstoffe unter Acesulfam K, Aspartam, Cyclaminsäure und ihren Natrium- und Calciumsalzen, Saccharin und seinen Natrium-, Kalium- und Calciumsalzen, Thaumatin und Neoesperidin DC ausgewählt werden.

8. Lösliche Süßstoffzusammensetzung gemäß Anspruch 1 bis 7, **dadurch gekennzeichnet, daß** die Zusammensetzung nichttoxische Hilfsstoffe enthält, die unter inerten Verdünnungsmitteln, wie Lactose, Calciumphosphat oder Natriumphosphat; Granulierungs- oder Auflösungsmitteln, wie Weizenstärke, Alginsäure, Polyvinylpyrrolidon; Bindemitteln wie Stärke, Gelatine, Cellulose; Gleitmitteln wie Magnesiumstearat, Stearinsäure, Magnesium-, Natrium- und Calciumsalzen der Stearinsäure und hydrierten vegetabilischen Salzen oder Talkpulver ausgewählt werden.

9. Verwendung einer löslichen Süßstoffzusammensetzung gemäß den Ansprüchen 1 bis 8 zum Süßen von warmen und kalten Getränken.

## Revendications

1. Composition soluble édulcorante ayant la forme d'une poudre ou d'un granulé qui contient au moins une fibre alimentaire soluble non-gélifiante et un ou plusieurs agents sucrants synthétiques, **caractérisée en ce que** ladite fibre alimentaire soluble non-gélifiante est l'inuline.

2. Composition soluble édulcorante selon la revendication 1, **caractérisée en ce que** l'inuline est contenue en mélange avec d'autres fibres alimentaires sélectionnées parmi le groupe de fibres alimentaires gélifiantes solubles, insolubles ou partiellement solubles.

3. Composition soluble édulcorante selon la revendication 2, **caractérisée en ce que** les fibres sont présentes selon des quantités de 30 à 99 % en poids dont au moins 50 % sont formées par l'inuline.

4. Composition soluble édulcorante selon la revendication 1, **caractérisée en ce que** les agents sucrants synthétiques sont présents selon des quantités de 0,5 à 5 % en poids des fibres.

5. Composition soluble édulcorante selon la revendication 2, **caractérisée en ce que** lesdites fibres alimentaires gélifiantes solubles sont sélectionnées parmi la pectine, l'agar-agar, une gomme de karaja, une gomme de guar, le glucomannane, du caroube, des graines de caroube.

6. Composition soluble édulcorante selon la revendication 2, **caractérisée en ce que** lesdites fibres alimentaires gélifiantes insolubles ou partiellement solubles sont sélectionnées parmi des poix, de la betterave, des pommes, de l'avoine, du blé, du maïs, du soja, du cacao, de l'orge, du caroube, des graines de caroube, des noisettes et des fibres de végétaux, d'agrumes et de céréales.

7. Composition soluble édulcorante selon la revendication 1, **caractérisée en ce que** les agents sucrants synthétiques sont sélectionnés parmi l'acesulfame K, l'aspartame, l'acide cyclamique et ses sels de sodium et de calcium, la saccharine et ses sels de sodium, potassium et calcium, la thaumatine, la néonespéridine DC.

8. Composition soluble édulcorante selon les revendications 1 à 7, **caractérisée en ce que** ladite composition contient des excipients non-toxiques sélectionnés parmi des diluants inertes, tels que du lactose, du phosphate de calcium ou du phosphate de sodium, des agents granulants et de désagrégation, tels que de l'amidon de blé, de l'acide alginique, du pyrrolidone polyvinylique, des agents de liaison tels que de l'amidon, des gélatines, de la cellulose, des agents lubrifiants tels que du stéarate de magnésium, de l'acide stéarique, des sels de magnésium, de sodium et de calcium d'acide stéarique et des sels végétaux hydrogénés ou une poudre de talc.

9. Utilisation d'une composition soluble édulcorante selon les revendications 1 à 8, pour sucrer des boissons chaudes et froides.
